# EUROPÄISCHE PATENTSCHRIFT

(11) **EP 2 075 425 B1**
(45) Veröffentlichungstag und Bekanntmachung des Hinweises auf die Patenterteilung: **24.10.2012**
(21) Anmeldenummer: 08171378.6
(22) Anmeldetag: 11.12.2008
(51) Int. Cl.: F01N 3/28, F01N 13/18, F01N 3/035

(54) **Abgasbehandlungseinrichtung mit Rohranordnung und Schiebesitz**
Exhaust gas treatment device with pipe assembly and sliding seat
Dispositif de traitement des gaz d'échappement avec agencement de tuyau et siège coulissant

(30) Priorität: 24.12.2007 DE 102007062663
(43) Veröffentlichungstag der Anmeldung: 01.07.2009
(73) Patentinhaber: J. Eberspächer GmbH & Co. KG, 73730 Esslingen (DE)
(72) Erfinder: Wieland, Arthur, 72631, Aichtal (DE); Krause, Michael, 73095, Albershausen (DE); Lehnen, Rainer, 73061, Ebersbach (DE); Wirth, Georg, 73230, Kirchheim/Teck (DE)
(74) Vertreter: BRP Renaud & Partner

(56) Entgegenhaltungen:
- EP-A- 0 537 603
- EP-A- 0 580 963
- EP-A- 1 329 608
- WO-A-2006/117468
- DE-A1- 4 318 343
- DE-A1- 10 021 494
- DE-A1- 19 929 423
- DE-C1- 19 918 301
- FR-A- 2 617 536

## Beschreibung

Die vorliegende Erfindung betrifft eine Abgasbehandlungseinrichtung mit einer Rohranordnung, bei der zumindest ein Rohr mit einem Schiebesitz an einem Trägerbauteil gelagert ist und mit einem derartigen Schiebesitz zur axial beweglichen Lagerung eines thermisch belasteten Rohrs an einem Bauteil.

Um thermisch belastete Rohre an einem Träger dauerhaft befestigen zu können, ist es üblich, das jeweilige Rohr einerseits mit einem Festlager und andererseits mit einem Loslager am jeweiligen Träger anzubringen, damit sich die Länge des Rohrs relativ zum Träger ändern kann, ohne dass dabei unzulässig hohe Spannungen zwischen Rohr und Träger auftreten. Zur Realisierung eines derartigen Loslagers können sogenannte Schiebesitze verwendet werden, bei denen das Rohr in einer im jeweiligen Träger ausgebildeten Aufnahmeöffnung sitzt, und zwar so, dass das Rohr bezüglich seiner Längsachse relativ zum Träger axial verstellbar ist, siehe beispielsweise DE 4 318 343 A1, EP 0 580 963 A1, EP 0 537 603 A1.

Thermisch belastete Rohre, die mittels Schiebesitz an einem Trägerbauteil gelagert werden, kommen in vielen Bereichen der Technik zur Anwendung, vorwiegend dort, wo heiße oder kalte Fluide in Rohren transportiert werden. Beispielsweise findet sich diese Problematik in Heizungsanlagen, Kühlanlagen und Abgasanlagen. Abgasanlagen finden sich bei Heizgeräten sowie bei Brennkraftmaschinen, vorzugsweise in Kraftfahrzeugen. Beispielsweise kann eine Abgasbehandlungseinrichtung zumindest ein Rohr enthalten, das in einem Gehäuse der Abgasbehandlungseinrichtung mit Hilfe eines solchen Schiebesitzes gelagert ist. Eine Abgasbehandlungseinrichtung kann beispielsweise ein Partikelfilter, ein Katalysator oder ein Schalldämpfer oder eine beliebige Kombination derartiger Einrichtungen sein.

Ein herkömmlicher Schiebesitz kann zwischen dem Rohr und der jeweiligen Aufnahmeöffnung ein gewisses Radialspiel aufweisen, um die axiale Verstellbarkeit des Rohrs im Sitz zu erleichtern. Dies ist für Anwendungen, die eine gewisse Gasdichtigkeit erfordern, ungünstig, da durch den Schiebesitz hindurch grundsätzlich ein Gasaustausch möglich ist. Insbesondere bei einer Abgasanlage ist im Hinblick auf schärfere Umweltschutzbestimmungen ein Entweichen von Abgas in die Umgebung, beispielsweise durch einen Schiebesitz, zu vermeiden.

Ferner besteht bei herkömmlichen Schiebesitzen grundsätzlich das Problem einer vergleichsweise hohen mechanischen Belastung des Rohrs beziehungsweise des jeweiligen Trägerteils innerhalb des Schiebesitzes. Mechanische Belastungen sind mit Verschleiß verbunden und können zu einer störenden Geräuschentwicklung führen.

Die vorliegende Erfindung beschäftigt sich mit dem Problem, für eine Abgasbehandlungseinrichtung eine verbesserte Ausführungsform anzugeben, die sich insbesondere dadurch auszeichnet, dass grundsätzlich eine gewisse Dichtungswirkung realisierbar ist und/oder dass die mechanische Belastung innerhalb des Schiebesitzes reduziert ist.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, den Schiebesitz mit einem Drahtgestrick auszustatten, das einerseits direkt oder indirekt am jeweiligen Bauteil fest angebracht ist und das sich andererseits außen am Rohr radial abstützt. Dabei ist ein erstes Rohr in einem Ausgangsabschnitt mit dem Schiebesitz an einem Gehäuse der Abgasbehandlungseinrichtung gehaltert, wobei das erste Rohr wenigstens ein Partikelfilterelement und wenigstens ein Oxidationskatalysatorelement enthält und einen radial herausnehmbaren Axialabschnitt aufweist, der das wenigstens eine Partikelfilterelement enthält. Im Betrieb kann sich das Rohr entlang des Drahtgestricks verschieben, wenn sich seine Länge aufgrund einer thermischen Belastung ändert. Da ein derartiges Drahtgestrick eine gewisse federelastische Nachgiebigkeit aufweist, reduziert sich die mechanische Belastung des Rohrs beziehungsweise des Bauteils innerhalb des Schiebesitzes.

Gleichzeitig können radial orientierte Relativbewegungen zwischen Rohr und Bauteil gefedert beziehungsweise gedämpft werden, die beispielsweise aufgrund von Vibrationen im Betrieb auftreten können. Damit verbundene Geräusche lassen sich dadurch effektiv reduzieren.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen, wie sie in den beigefügten Ansprüchen definiert ist.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen stark vereinfachten Längsschnitt durch eine Abgasbehandlungseinrichtung,
- Fig. 2: eine vergrößerte Darstellung eines Details der Abgasbehandlungseinrichtung im Bereich einer Rohranordnung,
- Fig. 3 bis 7: stark vereinfachte vergrößerte Darstellungen der Rohranordnung im Bereich eines Schiebesitzes, bei unterschiedlichen Ausführungsformen,
- Fig. 8 und 9: jeweils einen Längsschnitt wie in Fig. 1, jedoch bei anderen Ausführungsformen.

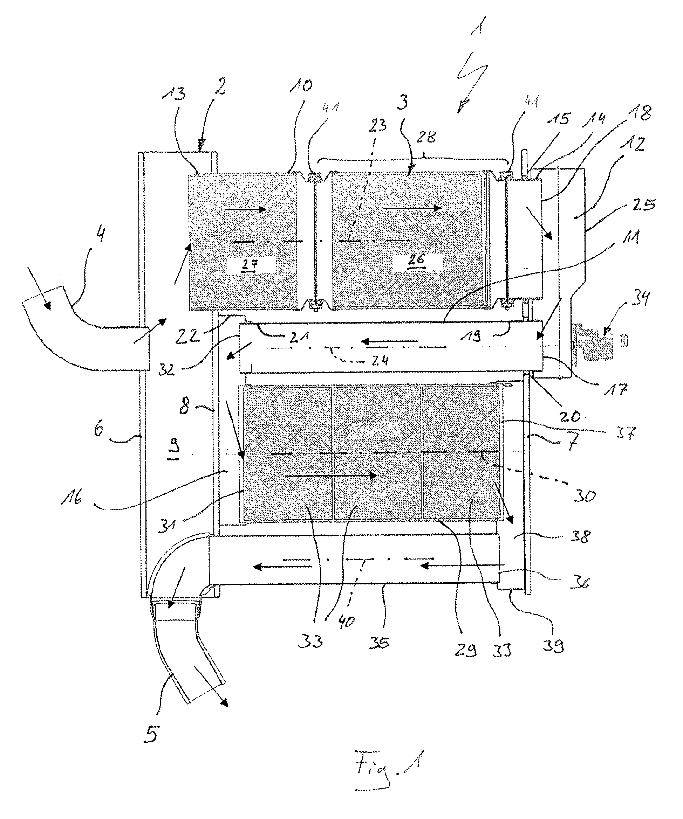

Entsprechend Fig. 1 umfasst eine Abgasbehandlungseinrichtung 1 ein Gehäuse 2 sowie zumindest eine Rohranordnung 3. Das Gehäuse 2 weist zumindest einen Eintritt 4 und wenigstens einen Austritt 5 auf. Das Gehäuse 2 besitzt in der hier gezeigten Ausführungsform zwei Endböden 6 und 7 sowie einen Zwischenboden 8. Der erste Endboden 6 begrenzt mit dem Zwischenboden 8 im Gehäuse 2 eine Eintrittskammer 9. An den ersten Endboden 6 ist der Eintritt 4 in Form eines Eintrittsstutzens angeschlossen.

Die Rohranordnung 3 umfasst zumindest zwei miteinander kommunizierende Rohre, nämlich ein erstes Rohr 10 und ein zweites Rohr 11. Das erste Rohr 10 kommuniziert eingangsseitig mit der Eintrittskammer 9 und ausgangsseitig mit einer Umlenkkammer 12. Das erste Rohr 10 ist in einem Eingangsabschnitt 13 an einem Trägerbauteil befestigt, das hier durch das Gehäuse 2 beziehungsweise durch einen Bestandteil des Gehäuses 2, nämlich hier durch den Zwischenboden 8 gebildet ist. In einem Ausgangsabschnitt 14 ist das erste Rohr 10 mit einem Schiebesitz 15 ebenfalls am Trägerbauteil, also am Gehäuse 2 gehaltert, und zwar am zweiten Endboden 7. Das zweite Rohr 11 kommuniziert eingangsseitig mit der Umlenkkammer 12 und ausgangsseitig mit einer Kammer 16, die als weitere Umlenkkammer oder als Verteilerkammer dienen kann. Über die Umlenkkammer 12 kommuniziert ein Eingang 17 des zweiten Rohrs 11 mit einem Ausgang 18 des ersten Rohrs 10. Da die Umlenkkammer 12 die beiden Rohre 10, 11 miteinander kommunizierend verbindet, kann sie im Folgenden auch als Verbindungskammer 12 bezeichnet werden. Das zweite Rohr 11 ist nun in einem Eingangsabschnitt 19 mit einem Schiebesitz 20 am Trägerbauteil, also am Gehäuse 2, speziell am zweiten Endboden 7 gehaltert. Außerdem ist das zweite Rohr 11 in einem Ausgangsabschnitt 21 ebenfalls am Trägerbauteil, also am Gehäuse 2 befestigt. Im vorliegenden Fall enthält das Gehäuse 2 zur Ausbildung der Kammer 16 einen Schalenkörper 22, an dem das zweite Rohr 11 in seinem Ausgangsabschnitt 21 befestigt ist.

Das erste Rohr 10 weist eine erste Längsmittelachse 23 auf. Das zweite Rohr 11 weist dementsprechend eine zweite Längsmittelachse 24 auf. Bei der gezeigten Ausführungsform erstrecken sich die beiden Längsmittelachsen 23, 24 parallel zueinander. Beide Rohre 10, 11 durchsetzen den jeweiligen Boden 7 in separaten Öffnungen.

Bei der hier gezeigten Ausführungsform münden der Ausgang 18 des ersten Rohrs 10 und der Eingang 17 des zweiten Rohrs 11 jeweils offen in der Verbindungskammer 12. Die Verbindungskammer 12 ist hier durch einen oder mehrere Schalenkörper 25 gebildet, die an den Ausgangsabschnitt 14 des ersten Rohrs 10 und an den Eingangsabschnitt 19 des zweiten Rohrs 11 angebaut sind. Alternativ ist auch eine Ausführungsform möglich, bei welcher besagte Schalenkörper 25 am zweiten Endboden 7 angebaut sind. Ebenso ist eine Ausführungsform möglich, bei welcher anstelle einer Verbindungskammer 12 ein gebogenes Verbindungsrohr verwendet wird, um die beiden Rohre 10, 11 miteinander zu verbinden. Besagtes Verbindungsrohr verbindet dann den Ausgang 18 des ersten Rohrs 10 mit dem Eingang 17 des zweiten Rohrs 11.

Bei der hier gezeigten Ausführungsform handelt es sich um eine Abgasbehandlungseinrichtung 1, die in einer Abgasanlage einer Brennkraftmaschine zum Einsatz kommen kann, wobei sich diese Brennkraftmaschine insbesondere in einem Kraftfahrzeug, bevorzugt in einem Nutzfahrzeug, befinden kann. Die Abgasbehandlungseinrichtung 1 ist hier multifunktional ausgestaltet und enthält zumindest ein Partikelfilterelement 26, das im ersten Rohr 10 angeordnet ist. Zusätzlich weist die Abgasbehandlungseinrichtung 1 hier zumindest ein Oxidationskatalysatorelement 27 auf, das hier ebenfalls im ersten Rohr 10 angeordnet ist, und zwar zweckmäßig stromauf des Partikelfilterelements 26. Außerdem kann die Abgasbehandlungseinrichtung 1 eine Schalldämpferfunktion erfüllen.

Das erste Rohr 10 besitzt hier einen radial herausnehmbaren Axialabschnitt 28, der hier durch eine geschweifte Klammer gekennzeichnet ist. Besagter Axialabschnitt 28 ist mittels Schnellbefestigungselementen 41, beispielsweise in Form von Schellen oder dergleichen, an den anderen Abschnitten des ersten Rohrs 10 befestigt. Hierzu können entsprechende Flansche ausgebildet sein, mit denen die Befestigungselemente 41 zusammenwirken. Das Partikelfilterelement 26 ist zweckmäßig innerhalb des radial herausnehmbaren Axialabschnitts 28 angeordnet. Auf diese Weise kann das jeweilige Partikelfilterelement 26 beispielsweise einfach erneuert oder ausgetauscht werden. Zweckmäßig wird dabei die gesamte Einheit aus Axialabschnitt 28 und darin eingebrachtem Partikelfilterelement 26 getauscht.

Im Beispiel ist zudem ein drittes Rohr 29 vorgesehen, dessen Längsmittelachse 30 ebenfalls parallel zu den Längsmittelachsen 23, 24 der beiden anderen Rohre 10, 11 ausgerichtet sein kann. Ein Eingang 31 des dritten Rohrs 29 kommuniziert mit einem Ausgang 32 des zweiten Rohrs 11. Im Beispiel münden das zweite Rohr 11 und das dritte Rohr 29 in die Kammer 16, so dass diese die kommunizierende Verbindung zwischen den beiden Rohren 11, 29 herstellt. Das dritte Rohr 29 kann zumindest einen SCR-Katalysator 33 enthalten. Im Beispiel sind drei derartige Katalysatorelemente 33 im dritten Rohr 29 hintereinander angeordnet. Mit Hilfe eines derartigen SCR-Katalysators 33 lässt sich eine selektive katalytische Reduktion bestimmter Schadstoffe realisieren.

Im Beispiel weist die Abgasbehandlungseinrichtung 1 außerdem eine Dosiereinrichtung 34 auf, mit deren Hilfe ein flüssiges Edukt in den Abgasstrom eingebracht werden kann. Zweckmäßig kann mit Hilfe der Dosiereinrichtung 34 Ammoniak oder Harnstoff oder bevorzugt eine wässrige Harnstofflösung in den Abgasstrom eingebracht werden. Harnstoff lässt sich durch eine Hydrolysereaktion zu Ammoniak aufbereiten. Mit Hilfe von Ammoniak lassen sich Stickoxide in Stickstoff umsetzen. Die entsprechenden Reaktionen laufen im SCR-Katalysator 33 ab.

Die Dosiereinrichtung 34 kann so angeordnet beziehungsweise so ausgestaltet sein, dass sie das jeweilige Edukt jedenfalls stromauf des SCR-Katalysators 33 in den Abgasstrom einbringt. Zweckmäßig erfolgt die Eindüsung stromab des Partikelfilters 26. Grundsätzlich kann die Eindüsung in die Umlenkkammer 12 erfolgen. Bevorzugt bringt die Dosiereinrichtung 34 das Edukt in den Eingangsabschnitt 19 des zweiten Rohrs 11 ein. Die Eindüsung des Edukts kann jedoch auch stromauf des zweiten Rohrs 11 erfolgen. Das zweite Rohr 11 kann dabei als Mischstrecke für Abgas und eingebrachtes Edukt dienen, um eine intensive Durchmischung von Abgas und Edukt zu realisieren.

Bei dem hier gezeigten Beispiel weist die Abgasbehandlungseinrichtung außerdem ein viertes Rohr 35 auf, das zum Austritt 5 führt beziehungsweise das mit dem als Austrittsstutzen ausgestalteten Austritt 5 verbunden ist. Ein Eingang 36 des vierten Rohrs 35 ist mit einem Ausgang 37 des dritten Rohrs 29 kommunizierend verbunden. Erreicht wird dies hier durch eine weitere Umlenkkammer 38, die mit Hilfe eines Schalenkörpers 39 und dem zweiten Endboden 7 realisiert ist. Eine Längsmittelachse 40 des vierten Rohrs 35 erstreckt sich im vorliegenden Fall wieder parallel zu den Längsmittelachsen 23, 24 des ersten Rohrs 10 beziehungsweise des zweiten Rohrs 11.

In der hier gezeigten Schnittansicht der Abgasbehandlungseinrichtung 1 ist jeweils nur ein einziges erstes Rohr 10, ein einziges zweites Rohr 11, ein einziges drittes Rohr 29 und ein einziges viertes Rohr 35 erkennbar. Es ist klar, dass bei besonderen Ausführungsformen zumindest eines der genannten Rohre 10, 11, 29, 35 auch mehrfach vorhanden sein kann. Beispielsweise können mehrere zweite Rohre 11 und/oder mehrere dritte Rohre 29 mit SCR-Katalysatoren 33 vorhanden sein.

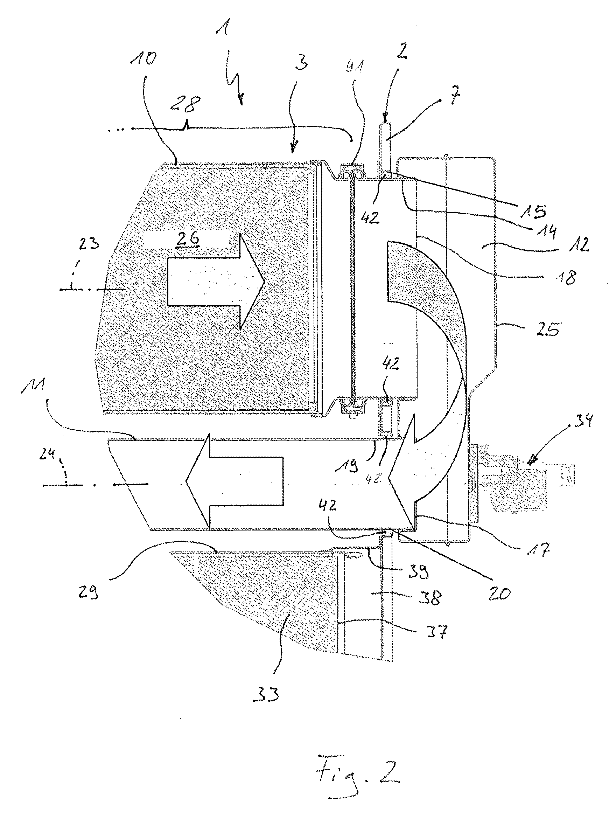

Entsprechend Fig. 2 weist der Schiebesitz 15, mit welcher das erste Rohr 10 am Trägerbauteil 2 beziehungsweise Gehäuse 2 gelagert ist, ein Drahtgestrick 42 auf. Dieses Drahtgestrick 42 ist bezüglich des Bauteils 2, also bezüglich des Gehäuses 2 ortsfest angeordnet und radial außen am ersten Rohr 10 abgestützt. Das Rohr 10 kann sich somit in seiner axialen Richtung entlang des Drahtgestricks 42 bewegen. Das Drahtgestrick 42 selbst ist direkt oder indirekt am Gehäuse 2 festgelegt.

Zusätzlich oder alternativ weist der Schiebesitz 20, mit dem das zweite Rohr 11 am Trägerbauteil 2 bzw. am Gehäuse 2 gelagert ist, ein Drahtgestrick 42 auf, das sich einerseits radial außen am zweiten Rohr 11 radial abstützt und das direkt oder indirekt am Bauteil 2 bzw. am Gehäuse 2 festgelegt ist.

Als Drahtgestrick 42 kommen grundsätzlich solche Drahtgestricke in Frage, die zur Fixierung eines Katalysatorelements in einem Katalysatorgehäuse zur Anwendung kommen können. Derartige Drahtgestricke 42 zeichnen sich durch eine vergleichsweise hohe Temperaturbeständigkeit sowie durch eine gewisse Federelastizität aus. Mit Hilfe des Drahtgestricks 42 kann der jeweilige Sitz 15 beziehungsweise 20 das jeweilige Rohr 10, 11 radial fixieren und dennoch axiale Relativbewegungen zwischen Rohr 10, 11 und Gehäuse 2 beziehungsweise zweitem Endboden 7 zulassen.

Grundsätzlich kann das Drahtgestrick 42 aus mehreren, in der Umfangsrichtung verteilt angeordneten, voneinander beabstandeten Gestrickkissen bestehen. Das Drahtgestrick 42 ist dabei mehrteilig, also aus mehreren separaten Gestrickkissen gebildet. Falls es jedoch auf eine gewisse Dichtigkeit im Schiebesitz 15 beziehungsweise 20 ankommt, ist das jeweilige Drahtgestrick 42 vorzugsweise so ausgestaltet, dass es zumindest aus einem Gestrickring besteht, der das jeweilige Rohr 10, 11 in Umfangsrichtung ringförmig geschlossen umfasst. Bei den hier gezeigten Ausführungsformen der Fig. 2 bis 7 ist jeweils nur ein einzelnes Gestrickkissen beziehungsweise ein einzelner Gestrickring erkennbar. Sofern mehrere Gestrickringe vorhanden sind, sind diese zweckmäßig axial nebeneinander angeordnet.

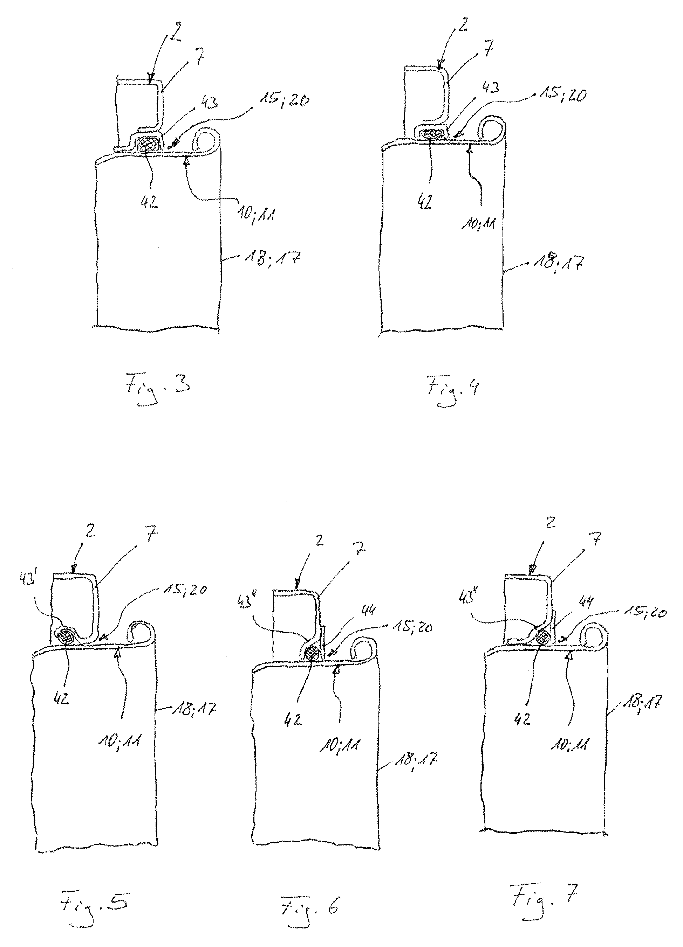

Bei den Ausführungsformen der Fig. 3 und 4 ist der jeweilige Schiebesitz 15, 20 zusätzlich mit einer Halterung 43 ausgestattet, die am jeweiligen Bauteil 2, also hier am Gehäuse 2 beziehungsweise an dessen Boden 7 befestigt ist. Besagte Halterung 43 dient zum Festlegen des Drahtgestricks 42 am Bauteil 2, also am Gehäuse 2. Die Halterung 43 kann beispielsweise ringförmig ausgestaltet sein und sich in Umfangsrichtung um das jeweilige Rohr 10, 11 erstrecken. Die Halterung 43 zeichnet sich bei den Ausführungsformen der Fig. 3 und 4 durch ein U-Profil aus, das eine radial nach innen offene Ringnut bildet, in welche das Drahtgestrick 42 eingesetzt ist.

Bei der in Fig. 5 gezeigten Ausführungsform ist besagte Halterung 43' quasi in das Bauteil 2 beziehungsweise das Gehäuse 2 integriert, und zwar hier durch eine entsprechende Formgebung des Bodens 7 im Randbereich einer nicht näher bezeichneten Öffnung, durch welche das jeweilige Rohr 10, 11 durch den Boden 7 hindurchgesteckt ist.

Bei den Ausführungsformen der Fig. 6 und 7 ist die Halterung 43" dadurch ausgebildet, dass das Bauteil 2 im Bereich des Schiebesitzes 15, 20 zur Ausbildung einer Aufnahme profiliert ist, die mit einer Abdeckung 44 vervollständigt ist, um so die Halterung 43" zu bilden.

Bei den Ausführungsformen der Fig. 3 und 4 besitzt das Drahtgestrick 42 einen rechteckigen oder ovalen Querschnitt.

Bei den Ausführungsformen der Fig. 5 bis 7 besitzt das Drahtgestrick 42 einen kreisförmigen Querschnitt. Bei den Ausführungsformen der Fig. 3 und 7 ist über die Halterung 43 beziehungsweise 43" eine zusätzlich zum Drahtgestrick 42 wirkende radiale Abstützung im Schiebesitz 15, 20 realisierbar, die mit einer Kontaktierung zwischen Halterung 43, 43" und Rohr 10, 11 arbeitet. Im Unterschied dazu erfolgt bei den Ausführungsformen der Fig. 4 bis 6 die radiale Abstützung im Schiebesitz 15, 20 ausschließlich über das Drahtgestrick 42.

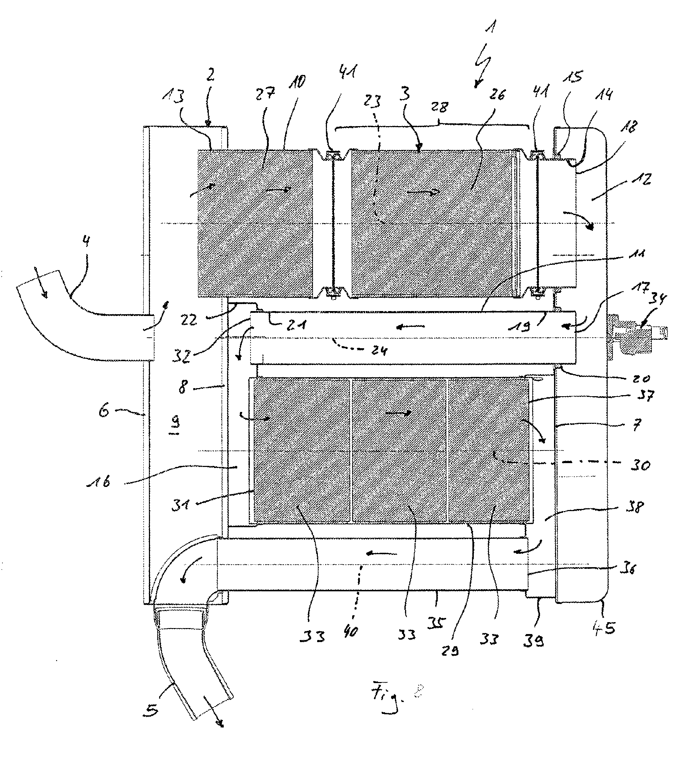

Die Ausführungsform gemäß Fig. 8 unterscheidet sich von der gemäß Fig. 1 lediglich dadurch, dass sich die Umlenkkammer 12 nunmehr über die gesamte Höhe oder Seite des zweiten Endbodens 7 bzw. der Abgasbehandlungseinrichtung 1 erstreckt. Hierdurch kann eine Absenkung des Gegendrucks erreicht werden. Zu diesem Zweck ist an den zweiten Endboden 7 ein schalenförmiger Deckelkörper 45 angebaut, so dass die Umlenkkammer 12 vom zweiten Endboden 7 und vom Deckelkörper 45 umschlossen bzw. begrenzt ist. Im Unterschied dazu bildet bei der Ausführungsform gemäß Fig. 1 der Schalenkörper 25 mit davon umschlossener bzw. begrenzter Umlenkkammer 12 ein bezüglich des zweiten Endbodens 7 separates Bauteil.

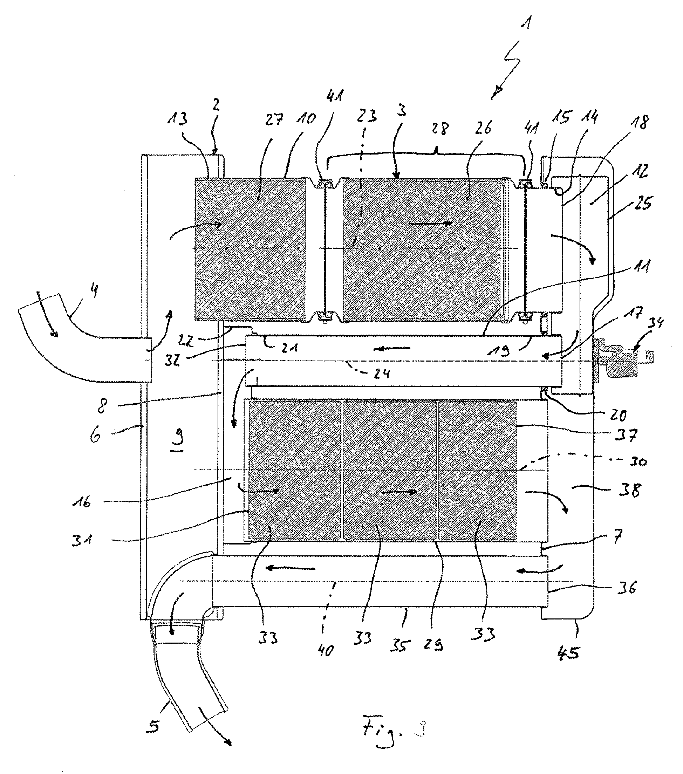

Bei der Ausführungsform gemäß Fig. 9 sind sowohl der bezüglich des zweiten Endbodens 7 separate Schalenkörper 25 zur Bildung der Umlenkkammer 12 als auch der sich über den gesamten zweiten Endboden 7 erstreckende und daran befestigte Deckelkörper 45 vorgesehen. Hierdurch ist die Umlenkkammer 12 innerhalb der Abgasbehandlungseinrichtung 1 doppelt gekammert, nämlich innerhalb des Schalenkörpers 25 und innerhalb des Deckelkörpers 45. Das Innere des Schalenkörpers 25 ist dabei gasdicht vom Inneren des Deckelkörpers 45 getrennt. Hierdurch kann der Deckelkörper 45 zusammen mit dem zweiten Endboden 7 den Raum bzw. die Kammer 38 bilden, die das Abgas vom dritten Rohr 29 in das vierte Rohr 35 umlenkt. Bei dieser Bauweise kann auf den anderen Schalenkörper 39 verzichtet werden, der bei den Ausführungsformen der Fig. 1 und 8 den genannten Umlenkraum 38 bildet bzw. umschließt.

## Patentansprüche

1. Abgasbehandlungseinrichtung, insbesondere für eine Abgasanlage einer Brennkraftmaschine,
- mit einem Gehäuse (2), das zumindest einen Eintritt (4) und zumindest einen Austritt (5) aufweist,
- mit einer Rohranordnung (3), die zumindest zwei miteinander kommunizierende Rohre (10, 11) aufweist,
- wobei ein erstes Rohr (10) in einem Eingangsabschnitt (13) am Gehäuse (2) befestigt ist,
- wobei das erste Rohr (10) in einem Ausgangsabschnitt (14) mit einem Schiebesitz (15) am Gehäuse (2) gehaltert ist,
- wobei ein zweites Rohr (11), dessen Eingang (17) mit einem Ausgang (18) des ersten Rohrs (10) verbunden ist, in einem Eingangsabschnitt (19) mit einem Schiebesitz (20) am Gehäuse (2) gehaltert ist,
- wobei das zweite Rohr (11) in einem Ausgangsabschnitt (21) am Gehäuse (2) befestigt ist,
- wobei zumindest einer der Schiebesitze (15, 20) ein Drahtgestrick (42) aufweist, das sich außen am jeweiligen Rohr (10, 11) radial abstützt und das direkt oder indirekt am Gehäuse (2) festgelegt ist,
**dadurch gekennzeichnet,**
**dass** das erste Rohr (10) wenigstens ein Partikelfilterelement (26) und wenigstens ein Oxidationskatalysatorelement (27) enthält und einen radial herausnehmbaren Axialabschnitt (28) aufweist, der das wenigstens eine Partikelfilterelement (26) enthält.

2. Abgasbehandlungseinrichtung nach Anspruch 1,
**dadurch gekennzeichnet,**
**dass** ein drittes Rohr (29) vorgesehen ist, dessen Eingang (31) mit einem Ausgang (32) des zweiten Rohrs (11) kommunizierend verbunden ist.

3. Abgasbehandlungseinrichtung nach Anspruch 2,
**dadurch gekennzeichnet,**
**dass** das dritte Rohr (29) wenigstens einen SCR-Katalysator (33) enthält.

4. Abgasbehandlungseinrichtung nach einem der Ansprüche 1 bis 3,
**dadurch gekennzeichnet,**
**dass** eine Dosiereinrichtung (34) zum Einbringen eines flüssigen Edukts vorgesehen ist.

5. Abgasbehandlungseinrichtung nach Anspruch 4,
**dadurch gekennzeichnet,**
**dass** das zweite Rohr (11) als Mischstrecke für Abgas und eingebrachtes Edukt dient.

6. Abgasbehandlungseinrichtung nach Anspruch 4 oder 5,
**dadurch gekennzeichnet,**
**dass** die Dosiereinrichtung (34) das Edukt in den Eingangsabschnitt (19) des zweiten Rohrs (11) einbringt.

7. Abgasbehandlungseinrichtung nach Anspruch 2,
**dadurch gekennzeichnet,**
**dass** ein viertes Rohr (35) vorgesehen ist, dessen Eingang (36) mit einem Ausgang (37) des dritten Rohrs (29) kommunizierend verbunden ist.

8. Abgasbehandlungseinrichtung nach Anspruch 7,
**dadurch gekennzeichnet,**
**dass** das vierte Rohr (35) zum Austritt (5) führt.

9. Abgasbehandlungseinrichtung nach einem der Ansprüche 1 bis 8,
**dadurch gekennzeichnet,**
**dass** die Längsmittelachsen (23, 24) des ersten Rohrs (10) und des zweiten Rohrs (11) parallel zueinander verlaufen.

10. Abgasbehandlungseinrichtung nach einem der Ansprüche 1 bis 9,
**dadurch gekennzeichnet,**
- **dass** ein gebogenes Verbindungsrohr vorgesehen ist, das den Ausgang (18) des ersten Rohrs (10) mit dem Eingang (17) des zweiten Rohrs (11) verbindet, oder
- **dass** eine Verbindungskammer (12) vorgesehen ist, in welcher der Ausgang (18) des ersten Rohrs (10) und der Eingang (17) des zweiten Rohrs (11) offen münden.

11. Abgasbehandlungseinrichtung nach einem der Ansprüche 1 bis 10,
**dadurch gekennzeichnet,**
**dass** das Drahtgestrick (42) in einer Halterung (43) festgelegt ist, die am Gehäuse (2) befestigt ist.

12. Abgasbehandlungseinrichtung nach einem der Ansprüche 1 bis 11,
**dadurch gekennzeichnet,**
- **dass** das Drahtgestrick (42) aus mehreren in der Umfangsrichtung verteilt angeordneten, voneinander beabstandeten Gestrickkissen besteht, oder
- **dass** das Drahtgestrick (42) aus wenigstens einem das jeweilige Rohr (10, 11) in Umfangsrichtung ringförmig umfassenden Gestrickring besteht.

## Claims

1. An exhaust gas treatment device, in particular for an exhaust system of a combustion engine,
- with a housing (2), comprising at least one inlet (4) and at least one outlet (5),
- with a pipe arrangement (3), which comprises at least two inter-communicating pipes (10, 11),
- wherein a first pipe (10) is fastened in an entry section (13) on the housing (2),
- wherein the first pipe (10) is held on the housing (2) in an exit section (14) with a sliding seat (15),
- wherein a second pipe (11), the entry (17) of which is connected to an exit (18) of the first pipe (10), is held on the housing (2) in an entry section (19) with a sliding seat (20),
- wherein the second pipe (11) is fastened on the housing (2) in an exit section (21),
- wherein at least one of the sliding seats (15, 20) comprises a wire knitting (42), which radially supports itself outside on the respective pipe (10, 11) and which is directly or indirectly fixed to the housing (2),
**characterized in that**
the first pipe (10) contains at least one particle filter element (26) and at least one oxidation catalytic converter element (27) and comprises a radially removable axial section (28), which contains the at least one particle filter element (26).

2. The exhaust gas treatment device according to Claim 1,
**characterized in that**
a third pipe (29) is provided, the entry (31) of which is communicatingly connected to an exit (32) of the second pipe (11).

3. The exhaust gas treatment device according to Claim 1,
**characterized in that**
the third pipe (29) contains at least one SCR catalytic converter (33).

4. The exhaust gas treatment device according to any one of the Claims 1 to 3,
**characterized in that**
a metering device (34) for introducing a liquid educt is provided.

5. The exhaust gas treatment device according to Claim 4,
**characterized in that**
the second pipe (11) serves as mixing section for exhaust gas and introduced educt.

6. The exhaust gas treatment device according to Claim 4 or 5,
**characterized in that**
the metering device (34) introduces the educt into the entry section (19) of the second pipe (11).

7. The exhaust gas treatment device according to Claim 2,
**characterized in that**
a fourth pipe (35) is provided, the entry (36) of which is communicatingly connected to an exit (37) of the third pipe (29).

8. The exhaust gas treatment device according to Claim 7,
**characterized in that**
the fourth pipe (35) leads to the outlet (5).

9. The exhaust gas treatment device according to any one of the Claims 1 to 8,
**characterized in that**
the longitudinal centre axes (23, 24) of the first pipe (10) and of the second pipe (11) run parallel to each other.

10. The exhaust gas treatment device according to any one of the Claims 1 to 9,
**characterized in that**
- a bent connecting pipe is provided which connects the exit (18) of the first pipe (10) to the entry (17) of the second pipe (11), or
- a connecting chamber (12) is provided, into which the exit (18) of the first pipe (10) and the entry (17) of the second pipe (11) openly lead.

11. The exhaust gas treatment device according to any one of the Claims 1 to 10,
**characterized in that**
wire knitting (42) is fixed in a holder (43) which is fastened to the housing (2).

12. The exhaust gas treatment device according to any one of the Claims 1 to 11,
**characterized in that**
- the wire knitting (42) consists of a plurality of knitting pads spaced from one another and arranged distributed in the circumferential direction, or
- the wire knitting (42) consists of at least one gas knitting ring enclosing the respective pipe (10, 11) in circumferential direction in a ringshaped manner.

## Revendications

1. Dispositif de traitement de gaz d'échappement, notamment pour une installation de gaz d'échappement d'un moteur à combustion interne,
- comportant un logement (2), qui présente au moins une entrée (4) et au moins une sortie (5),
- comportant un assemblage de tuyaux (3), qui présente au moins deux tuyaux (10, 11) communiquant l'un avec l'autre,
- dans lequel un premier tuyau (10) est fixé dans une portion d'entrée (13) sur le logement (2),
- dans lequel le premier tuyau (10) est maintenu dans une portion de sortie (14) avec une assise coulissante (15) sur le logement (2),
- dans lequel un deuxième tuyau (11), dont l'entrée (17) est reliée à une sortie (18) du premier tuyau (10) est maintenu dans une position d'entrée (19) avec une assise coulissante (20) sur le logement (2),
- dans lequel le deuxième tuyau (11) est fixé dans une portion de sortie (21) sur le logement (2),
- dans lequel au moins une des assises coulissantes (15, 20) présente une maille en fil tricoté (42), qui s'appuie radialement à l'extérieur sur le tuyau respectif (10, 11) et qui est immobilisée directement ou indirectement sur le logement (2),
**caractérisé en ce que**
le premier tuyau (10) contient au moins un élément de filtre à particules (26) et au moins un élément de catalyseur à oxydation (27) et présente une portion axiale (28) pouvant être retirée, qui contient au moins un élément de filtre à particules (26).

2. Dispositif de traitement de gaz d'échappement selon la revendication 1,
**caractérisé en ce que**
un troisième tuyau (29) est prévu, dont l'entrée (31) est reliée de manière communicante à une sortie (32) du deuxième tuyau (11).

3. Dispositif de traitement de gaz d'échappement selon la revendication 2,
**caractérisé en ce que**
le troisième tuyau (29) contient au moins un catalyseur SCR (33).

4. Dispositif de traitement de gaz d'échappement selon une des revendications 1 à 3,
**caractérisé en ce que**
un dispositif de dosage (34) pour introduire un réactant liquide est prévu.

5. Dispositif de traitement de gaz d'échappement selon la revendication 4,
**caractérisé en ce que**
le deuxième tuyau (11) sert de conduit de mélange du gaz d'échappement et du réactant appliqué.

6. Dispositif de traitement de gaz d'échappement selon les revendications 4 ou 5,
**caractérisé en ce que**
le dispositif de dosage (34) introduit le réactant dans la portion d'entrée (19) du deuxième tuyau (11).

7. Dispositif de traitement de gaz d'échappement selon la revendication 2,
**caractérisé en ce que**
un quatrième tuyau (35) est prévu, dont l'entrée (36) est reliée de manière communicante à une sortie (37) du troisième tuyau (29).

8. Dispositif de traitement de gaz d'échappement selon la revendication 7,
**caractérisé en ce que**
le quatrième tuyau (35) mène à la sortie (5).

9. Dispositif de traitement de gaz d'échappement selon une des revendications 1 à 8,
**caractérisé en ce que**
les axes médians longitudinaux (23,24) du premier tuyau (10) et du deuxième tuyau (11) s'étendent parallèlement l'un à l'autre.

10. Dispositif de traitement de gaz d'échappement selon une des revendications 1 à 9,
**caractérisé en ce que**
- un tuyau de liaison arqué est prévu, lequel relie la sortie (18) du premier tuyau (10) à l'entrée (17) du deuxième tuyau (11),
- une chambre de liaison (12) est prévue, dans laquelle la sortie (18) du premier tuyau (10) et l'entrée (17) du deuxième tuyau (11) débouchent.

11. Dispositif de traitement de gaz d'échappement selon une des revendications 1 à 10,
**caractérisé en ce que**
la maille en fil tricoté (42) est immobilisée dans un support (43), qui est fixé sur le logement (2).

12. Dispositif de traitement de gaz d'échappement selon une des revendications 1 à 11,
**caractérisé en ce que**
- la maille en fil tricoté (42) est constituée de plusieurs coussins en maille espacés les uns des autres, répartis dans la direction circonférentielle, ou
- la maille en fil tricoté (42) est constituée d'au moins une bague en maille englobant annulairement le tuyau respectif (10, 11) dans la direction circonférentielle.
